# EUROPEAN PATENT SPECIFICATION

(11) **EP 4 282 620 B1**
(45) Date of publication and mention of the grant of the patent: **16.07.2025**
(21) Application number: 23200818.5
(22) Date of filing: 07.07.2020
(51) Int. Cl.: B29C 53/36, B29C 63/48, B32B 37/12, B32B 38/18

(54) **SYSTEM FOR ADHESIVE BONDING OF SUBSTRATES**
SYSTEM ZUM VERKLEBEN VON SUBSTRATEN
SYSTÈME POUR COLLER DES SUBSTRATS

(43) Date of publication of application: 29.11.2023
(62) Divisional of application: 20382607.8
(73) Proprietor: Barberan Latorre, Jesús Francisco, 08860 Castelldefels (Barcelona) (ES)
(72) Inventor: Barberan Latorre, Jesús Francisco, 08860 Castelldefels (Barcelona) (ES)
(74) Representative: Plasseraud IP

(56) References cited:
- EP-A2- 1 092 528
- WO-A1-2019/038613
- US-A- 5 573 832
- US-A1- 2006 198 993
- US-A1- 2009 104 448

## Description

### Sector of the art

The object of the present invention is a system for adhesive bonding of substrates which enables the manufacture of products for the adhesive bonding of substrates formed by a coating support, such as a panel or a profile, and a coating material, such as a sheet or laminate, both adhered by means of a glue, providing a high quality in the surface finish of the adhesive bonding product. These adhesive bonding products include laminated panels and profiles coated with sheet.

The system for adhesive bonding of substrates object of the present invention is especially indicated in those products comprising a substrate that has to be postformed. Likewise, it is especially indicated for coating materials that have a high gloss, are transparent or similar, wherein, due to the very features thereof, it is possible to easily see application defects of the coating.

The system for adhesive bonding of substrates object of the present invention has applications in the field of manufacturing products for construction and furniture, such as panels for furniture, doors and floors, profiles for door and window frames, etc.

### State of the art

In the industry for manufacturing laminated panels or coated profiles, glues applied to the coating material and/or the substrate to be coated are usually used and, subsequently, said coating is applied on the panel or profile.

The glues have to be in a liquid state in order to be applied, spread, smoothed, in order for them to effectively penetrate etc. the substrates. After the application, in order to achieve the necessary adhering strength, the solidification and the curing of the glue are produced (when this mechanism is available). The curing of the glue or adhesive is a process of internal crosslinking or polymerization of the glue. The solidification involves the use of physical methods, in order to change the glue from a liquid state to a solid state, such as evaporation or lowering the temperature thereof.

Depending on the type of application, different types of glue are used. Despite the wide variety of glues existing today, in all of them, it is essential to understand and take into account certain parameters when choosing one type of glue or another.

One of these parameters is the viscosity of the glue, viscosity being understood as the measurement of the resistance had by said glue to deformations or capacity for flowability. The viscosity arises in order to measure the resistance to movement of the particles of the glue.

Another parameter to take into account is the tack of the glue. The tack refers to the grip strength of the adhesive with the outer elements. It is, so to speak, what the glue "bites". It is determined by the polarity of the molecules making up the glue, Van der Waals forces, etc.

Another parameter is the internal cohesion. This is the intermolecular force, inside the adhesive itself, which keeps the particles of the adhesive bonded together. It is closely linked to the viscosity since, at a low internal cohesion, the adhesive flows more easily.

Lastly, and as a summary of the previous parameters, is the adhering strength of an adhesive, which is the strength of the adhesive bond between the two substrates to be bonded. The adhering strength of an adhesive or glue is determined by the lowest of the values between the tack and the internal cohesion.

Likewise, it is worth mentioning that adhesives have a feature known as "open time". This is the maximum time available between the liquid state thereof at the beginning of the application (less viscous) and an intermediate point (more viscous), in a less liquid state (because, for example, a certain amount of water has evaporated in the case of PVAc glues, or the temperature has been lowered in the case of heat-fusible glues or the curing thereof has advanced), during which said adhesive enables operations to be performed before the final bonding without being considered degraded.

As already introduced, depending on the specific needs of the bond, some glues, or others with some values or others of the parameters mentioned above are used.

During any gluing process, the initial internal cohesion is very low since the glue is liquid (low viscosity). Thus, for example, a white water-based glue "stains" (due to tack) the panel and the laminate that is to be glued on it, however, initially, these are not tightly bonded, they can be separated while the glue is not yet dry (low internal cohesion/viscosity). As the glue dries (or cools and/or cures, that is, polymerizing, in the case of an adhesive applied when hot (such as hotmelt)) the viscosity increases and, thus, the internal cohesion thereof as well, until it reaches the solid state and total polymerization (if it has a polymerization mechanism). From the application of the glue to the total solidification and total curing thereof (if there is any), there may be an initial phase wherein the internal cohesion is less than the tack of the glue. As the glue solidifies, and cures, if appropriate, either by evaporation, cooling, polymerization, etc. once the internal cohesion is greater than the tack, the weakest link in the bond between panel and laminate is said tack.

In certain applications, in lamination and/or coating, it requires, at the time of application or close to said application, and on some surfaces, or on a portion thereof, there is a good ability to apply, spread and/or smooth the glue very uniformly, and then and on these same surfaces or other surfaces, or on a portion thereof, a high and instantaneous adhering strength is required at the suitable time.

In an adhesive, these two features do not occur simultaneously. If the adhesive is in a low-viscosity state, it can be spread/smoothed very well, but then, although it has a capacity for adhesion on the surface whereon the glue is applied (tack), it does not have a strong internal cohesion until the viscosity thereof increases. And, on the contrary, when you have an adhesive with a certain tack and a high internal cohesion (high viscosity), the adhesive can no longer be easily spread/smoothed.

This need to have an adhesive with these features available "à la carte" is generated because certain coated panels, which may be postformed, and/or certain coated profiles must be able to be manufactured without, at least on the larger surfaces thereof, imperfections being seen due to the very application of the glue located underneath the coating material. Some coating materials "hide" more or enable imperfections to be seen less due to this gluing. Others, however, are very "sensitive" to any imperfection of the gluing, in other words, they let us see any defect underneath them. They are "transparent" to what they have underneath and sometimes they even increase it, magnifying it. This is the case, for example, of the coatings with materials having a high gloss (materials the surface finish of which resembles that of a mirror) or transparent materials or similar.

Thus, for example, in the lamination (process for producing laminated panels) or coating (process for producing coated profiles) of substrates with coating sheets or laminates that have a high gloss or are transparent, any imperfection in the application and/or smoothing of the glue on the larger or diaphanous surface(s) of the substrate is very easily seen.

There are different kinds of imperfections. The most frequent are: "structuring of the glue", "application of the glue in strips" or "air bubbles" which appear between the substrate and the coating material. Next, what these imperfections consist of is briefly explained.
- Structuring of the glue: This is an imperfection that arises from the mere fact of applying some glues by means of certain application systems on the surfaces to be applied, due to the influence of the surface tensions of the elements involved (glue, applicator element, element whereon it is applied) in addition to the viscosity of the glue and the relative speeds of the different elements between them.

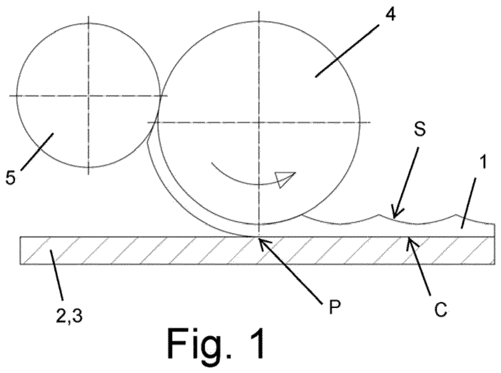

When the glue is applied on the panel or on the coating material by means of a roller (see Figure 1), the glue comes into contact with the material at the application point (P), there being a contact surface (C) between the material and the layer of glue applied. On said contact surface (C), the glue is initially fixed to the material due to capillary action; however, the upper surface (S) of the layer of glue is still initially glued, also due to capillary forces, to the applicator roller. On the contact surface (C) between the glue and the material whereon it is applied, the layer of glue acquires the speed of the material (this material is normally being moved by means of rollers, conveyor belt or other movement means), while the upper surface (S) of the glue layer still has the same speed of the roller. However, the fixing force of the glue, by capillarity, to the roller is less (the material from which the applicator rollers are made is anti-adherent) than the sticking force by capillarity of the glue to the material whereon it is applied; therefore, as the upper surface (S) of the glue tries to advance in the direction provided by the roller, it detaches from the roller, generating a structure with a crest/valley geometry, this process repeating throughout the duration time of the application of the glue to the material.

The aforementioned defect becomes more pronounced when the amount of glue applied is greater. This is because, although the force due to the capillarity on the contact surface (C) is greater than the capillary force on the upper surface (S), in this incipient state of the gluing process, the internal cohesion force thereof is still somewhat weak, and then it enables more stretching until the upper surface (S) comes off the roller and, therefore, higher crests/valleys are formed.

The mentioned defect of the structuring in "crests/valleys" is also enhanced when the applied glue has a higher viscosity. This is because, when the glue has a higher viscosity, the flowability of the glue decreases and therefore it decreases the capacity of the glue for "automatic levelling" after the application, fixing the glue more quickly.

This defect in the formation of the "crest/valley" structure is the one that, after applying certain coating materials, manifests with what is known as "orange peel".

Moreover, when the application of the glue to the substrate is performed by means of an applicator "lip", the structuring effect of the glue is less than in roller application since the lip is a static element. In application by means of lips, the appearance of "line" defects lacking glue is more common, caused by blockages in the application groove of the lip (at the outlet of the nozzle) due to impurities or crosslinked glue, etc.

Imperfections or structural defects of the glue are normally corrected by means of smoothing the glue after the application. In a certain application, if it is not possible to smooth because the viscosity does not enable it, or it is simply a process wherein there is no smoothing, it is more likely, as already explained, that there is structuring of the glue if there is more of it than if there is less.
- Glue application in strips: consists of the appearance of strips of glue on the panel or on the coating (depending on the substrate whereon the glue is applied), said strips having a higher or lower grammage, perpendicular to the longitudinal dimension of the advance direction of the panel or the coating. This is produced by the existence of a lack of uniformity in the continuity of the longitudinal advance provided by the different elements involved in the process: different transmissions, substrate, coating element, brakes of the coils, etc., due to the interferences produced between them. If the glue is viscous, these defects manifest more clearly, while if it is less viscous it blends better. This manifests in the final product as what is known as the "fishbone effect".
- Air bubbles: this defect consists of the appearance of air bubbles between the coating material and the glue or between the panel and the glue (depending on the substrate wherein the glue is initially applied). This defect occurs mainly with rigid coating materials.

At present, what is being done is that the minimum amount of adhesive is used that has, in the application state thereof, the lowest possible viscosity, but offers sufficient internal cohesion in order to glue and hold the substrates together during the positioning thereof and, if appropriate, postforming, such that the coating is well fixed to the substrate during the production. These viscosities do not enable an easy smoothing of these adhesives after the application thereof but, at least, it is sought to be as low as possible as needed, in particular, in the areas to be postformed and, therefore, decrease, as much as possible, the defects caused by an excessive viscosity of the glue or the amount thereof.

Another solution to this problem, for these laminations and coatings existing in the state of the art, is the application of different glues with different viscosities (and therefore with different degrees of internal cohesion) to the different areas as needed (for example, areas of the substrate to be postformed and which, therefore, will be subjected to large mechanical stresses, and, areas of the substrate that will not be postformed and that, therefore, will be subjected to smaller mechanical stresses). This solution generates several drawbacks, such as having to dispense different glues, using multiple dispensers and the complexity of defining the application so that there are no problems (interferences) in the boundary areas of the different application areas of different glues.

US 2006/198993 A1 discloses a multilayer washable material which comprises at least one layer of a textile material, the layers being joined to one another using an adhesive composition. The adhesive composition used is preferably a moisture-curing reactive polyurethane hotmelt material.

The solutions existing in the state of the art have not been able to alleviate the problems described above in a satisfactory manner which, furthermore, guarantees at the same time that the substrates are strongly adhered to each other, for example, in the postforming areas.

### Object of the invention

In order to solve the aforementioned drawbacks, the present invention relates to a system for adhesive bonding of substrates as defined in the appended claims.

The method for adhesive bonding of substrates not part of the object of the present invention comprises:
- applying an adhesive layer on a first substrate and/or on a second substrate; and
- positioning the first substrate on the second substrate, with interposition of the applied adhesive layer.

In a novel manner, the method comprises applying radiation curing means on the adhesive layer in order to partially cure said adhesive layer in a selected manner, said selected and partial curing being carried out before the positioning of the first substrate on the second substrate.

According to the disclosure but not being object of the invention, by means of the curing means, a selected and partial curing is performed before the positioning. In the context of the invention, selected and partial curing is understood as curing that is carried out with a selected or predetermined degree of curing without a total or complete curing being produced before the positioning. In other words, for example, the adhesive layer can be cured before the positioning by at least 50 % or, preferably, at least 75 %, etc., which corresponds to the fact that the degree of polymerization achieved, in percentage with respect to the complete polymerization, of the material of the adhesive layer is, respectively, at least 50 % or 75 %. A higher percentage of curing or polymerization favours the increase in viscosity of the adhesive layer and therefore the internal cohesion thereof. In this manner, it is possible to provide a suitable internal cohesion by increasing the viscosity of the adhesive layer without harming the necessary tack (unlike what would happen, for example, when trying to increase the viscosity by varying the means which give the glue the liquid state thereof, for example, evaporating the water in a White glue or PVAc, or lowering the temperature in a heat-fusible glue, wherein it would harm the tack) and with the suitable adhering strength to bond the substrates.

This application of the curing means is performed by radiation, in other words, the adhesive used is configured for the curing or polymerization thereof by means of the application of radiation. The radiation enables the application of curing energy in an effective manner in order to produce a sufficiently fast or accelerated curing in correspondence with the typical times of the industrial processes necessary for the positioning of the substrates to be bonded, particularly, for the bonding of coating materials, such as continuous laminates or sheets, and coating supports, such as panels or profiles. These process times can be in the order of seconds.

According to the disclosure but not being object of the invention, any type of radiation can be used to cure the adhesive used. Preferably, curing by electromagnetic radiation is envisaged, for example, by means of UV or IR, or corpuscular radiation, such as with electrons (EB, "Electron Beam").

According to the invention, it is envisaged that, after the positioning of the substrates, the adhesive layer can finish curing, for example, also by means of the application of radiation which can cross through the coating substrate.

Advantageously, with respect to the conventional adhesive bonding methods wherein adhesives with slow curing mechanisms are used (taking hours or even days), such as PUR (polyurethane) reacting with the humidity of the air, the invention enables a suitable viscosity to be provided in a selectable manner before the positioning without harming the tack and adhering strength of the substrates.

In this manner, it is providing versatility to the adhesive bonding method in that it enables the use of a wide variety of adhesives in order to achieve a sufficient internal cohesion in a controlled manner, unlike the state of the art wherein, in order to increase the internal cohesion, the viscosity is increased, for example, by cooling the glue before the positioning in the case of heat-fusible glues, which harms the tack, or they are glues with a high initial viscosity in order to provide a high internal cohesion, having a suitable tack, at the time of the positioning. The radiation enables the curing to be accelerated in a controlled manner in order to increase the internal cohesion before the positioning without harming the tack and the adhering strength.

Furthermore, it is envisaged that the adhesive may have an additional curing mechanism which, in particular, can be activated before and/or after the positioning. For example, A PUR adhesive can be used which has a dual curing mechanism with additional curing due to a reaction with the moisture. An example of such an adhesive is commercially available under the brand name "Dual Curing" by Henkel. For the purposes of the invention, any other adhesive with an additional curing mechanism can be used. In this sense, for example, curing by mixing an additional component with the adhesive (for example, water), cured by evaporation, etc.

As radiation curing means, for example, the use of radiation emission lamps, for example, lamps with UV radiation, LED or electric arc discharge, lamps with IR radiation, NIR, etc. are envisaged. As additional curing means, for example, the use of humidifiers, evaporators, etc. are envisaged.

Preferably, the process comprises, in order to position the first substrate on the second substrate, postforming, by means of postforming means, at least one strip of the first substrate on at least one contour of the second substrate.

According to a possible embodiment, the method for adhesive bonding of substrates object of the present disclosure, however not an object of the invention, comprises applying curing means on the adhesive layer in correspondence with the at least one strip of the first substrate before (and/or during) the postforming thereof on the at least one contour of the second substrate.

"Postforming" is understood as the set of operations to mould, adapt or couple the first substrate to the geometry of the second substrate, such that the first substrate coats the second substrate in those strips, sections or contours wherein initially, with the simple arrangement of the first substrate on the second substrate, the second substrate was not coated by the first substrate.

By means of the described method, it is possible to notably increase the adhering strength of the first substrate in those strips subjected to the postforming. This is especially useful considering that, due to the elastic nature and/or the shape memory, the first substrate may have a strong tendency to detach from the second substrate in those contours wherein it has been postformed.

Therefore, it is not necessary to use different glues/adhesives, especially in postforming areas/strips, and the adhesive can be applied with a very low degree of viscosity which enables the smoothing, or, at least, minimizing the effects due to the very application, this not supposing a problem that causes a low adhering strength, especially in the postforming areas, since these are subjected to the curing means.

This feature enables "playing" with two factors that intervene in the curing of the adhesive, namely: the curing power of the curing means and the time that elapses between the application of the curing means and the positioning of the first substrate on the second substrate, such that the adhering strength of the adhesive is enhanced, especially at the time that the postforming is produced.

In this manner, it is possible to comfortably apply the curing means, both in the areas to be postformed, and in areas that will not be postformed.

According to a possible embodiment, the method for adhesive bonding of substrates comprises postforming in several steps, by means of the postforming means, different strips of the first substrate on different contours of the second substrate.

In these circumstances, it is envisaged that the method comprises performing at least a second application of curing means between two steps of the postforming.

This feature enables the curing means to be applied in the instants immediately before the postforming of each strip of the first substrate that will be postformed, therefore, having the ideal adhering strength in each strip that will be postformed at the ideal time, that is, immediately before the operation of postforming said strip.

As mentioned previously, according to a possible embodiment, the method for adhesive bonding of substrates comprises applying the curing means on a first strip of the first substrate that will not be postformed, in particular, in combination with at least one strip of the first substrate that will be postformed.

This feature enables the strip of the first substrate that will not be postformed to be fixed in a very firm manner to the second substrate, such that relative movements between the first substrate and the second substrate are prevented in the case of the strips that will be postformed strongly pulling the non-postformed strip positioned on the second substrate.

The application of different types of curing means mentioned above enables the adhering strength of the adhesive to be enhanced with different degrees of effectiveness and/or to be adapted to the different kinds of adhesive that can be used.

Preferably, the method for adhesive bonding of substrates comprises smoothing the adhesive layer (all or part of it) immediately after the application thereof on the first substrate and/or on the second substrate. In this manner, it improves the finish of the first substrate after having been positioned or postformed on the second substrate, preventing the appearance and/or perception of defects due to the very application of the glue, for example, the structuring of the adhesive layer.

According to a possible embodiment of the method for adhesive bonding of substrates, the first substrate is a coating material, and the second substrate is a coating support whereon the coating material is positioned. The coating support may have the shape, for example, of a profile or panel. The coating material may have the shape, for example, of a sheet or laminate.

The method for adhesive bonding enables adhesive bonding products such as laminated panels and coated profiles to be obtained. The invention is applicable, for example, to wood panels, agglomerates, HDF, MDF, aluminium sheets, iron or plastic, wood profiles, HDF, MDF, PVC, aluminium, etc.

A panel is understood as a product which has a substantially flat shape, with relatively large dimensions in width and length (usually longer than they are wide), and a certain thickness. A profile is understood as a product with an oblong shape, wherein the largest dimension thereof is the length, and the thickness and width thereof are similar. A laminated panel is understood as a panel with a coating, which can be flat or postformed if, in addition to the substantially flat surface, the edges thereof are also coated, etc. In the coated profiles, the coating thereof generally carries a postforming.

The present invention relates to a system for adhesive bonding of substrates, being applicable to substrates wherein a first substrate is a coating material, in particular, a laminate, and a second substrate is a coating support, in particular, a panel, whereon the coating material is positioned.

The system for adhesive bonding of substrates comprises application means for applying an adhesive layer on the coating material and/or on the coating support, and positioning means for positioning the coating material on the coating support.

The positioning means can be formed by at least one roller for positioning the coating laminate, such that the sheet is positioned on the support when it is pressed by the positioning roller against the support.

In a novel manner, the system for adhesive bonding of substrates object of the present invention comprises radiation curing means in order to partially cure the adhesive layer arranged between the adhesive layer application means and the positioning means in a selected manner.

The system for adhesive bonding of substrates object of the present invention comprises postforming means for postforming at least one strip of the coating material, in particular, a laminate, on at least one contour of the coating support, in particular, a panel, wherein the postforming means perform the adaptation of the coating sheet to the specific geometry of the at least one contour of the panel, the system being configured to apply the curing means on at least one strip of the adhesive layer in correspondence with the at least one strip of the coating material to be postformed on the at least one contour of the coating support.

The positioning means can be formed by at least one roller for postforming the coating laminate, such that the sheet is postformed on the support when it is pressed by the postforming roller against the support.

Likewise, preferably, the system for adhesive bonding of substrates object of the present invention is configured to carry out the method for adhesive bonding of substrates as described previously.

The present disclosure also relates to an adhesive bonding produc, however not an object of the invention, obtained according to the method described above. Especially, to an adhesive bonding product comprising a first substrate which is a coating sheet and a second substrate which is a coating support whereon the coating sheet is positioned, said substrates being bonded according to the method described above.

### Description of the figures

As part of the explanation of at least one embodiment of the invention, the following figures have been included.
Figure 1 shows a schematic view of the structure in the form of crests and valleys of an adhesive/glue layer applied by means of an applicator roller on a coating sheet or on a panel.
Figure 2a shows a system for adhesive bonding of substrates with postforming of the assembly formed by the panel and coating sheet, wherein the adhesive is applied to the continuous coating sheet by means of an applicator roller, with a subsequent phase of smoothing the adhesive layer on the coating sheet.
Figure 2b shows a system for adhesive bonding of substrates like the one in Figure 2a, wherein there is no phase of smoothing the adhesive layer on the coating sheet after the application thereof.
Figure 3a shows a system for adhesive bonding of substrates with postforming of the assembly formed by the panel and coating sheet, wherein the adhesive is applied to the coating sheet by means of a lip, with a subsequent phase of smoothing the adhesive layer on the coating sheet.
Figure 3b shows a system for adhesive bonding of substrates like the one in Figure 3a, wherein there is no phase of smoothing the adhesive layer on the coating sheet after the application thereof.
Figure 4 shows a system for adhesive bonding of substrates with postforming of the assembly formed by the panel and coating sheet, wherein the adhesive is applied to the coating sheet by means of spray nozzles.
Figure 5 shows a system for adhesive bonding of substrates like the one in Figure 3b, wherein there are curing means inserted between the different postforming means.
Figure 6 shows a simplified view of a cross section of the coating sheet.
Figure 7 shows a simplified view of a cross section of the panel whereon the coating sheet is positioned.
Figure 8 shows a simplified view of a cross section of the coating sheet with an adhesive/glue layer applied without smoothing.
Figure 9 shows a simplified view of a cross section of the coating sheet with an adhesive/glue layer that is applied and smoothed.
Figure 10a shows a simplified view of the use of curing means for curing the adhesive on two end strips of the adhesive layer applied on the coating sheet.
Figure 10b shows a simplified view of the coating sheet of Figure 10a, with the two end strips in an advanced state of curing, wherein the coating sheet is positioned on the panel, with interposition of the adhesive layer, before the postforming of the assembly formed by the panel and coating sheet.
Figure 10c shows a simplified view of the assembly of panel and coating sheet of Figure 10b, after the postforming.
Figure 11a shows a simplified view of the use of curing means for curing the adhesive on the entirety of the adhesive layer applied on the coating sheet.
Figure 11b shows a simplified view of the coating sheet of Figure 11a, with all of the adhesive layer thereof in an advanced state of curing, wherein the coating sheet is positioned on the panel, with interposition of the adhesive layer, before the postforming of the assembly formed by the panel and coating sheet.
Figure 11c shows a simplified view of the assembly of panel and coating sheet of Figure 11b, after the postforming.
Figure 12 shows a simplified view, according to cross section HH of Figure 5, wherein a first application of curing means for curing the adhesive is seen on a first strip of the adhesive layer deposited on the coating sheet, wherein the first strip of the adhesive layer corresponds to a first strip of the coating sheet that will not be postformed after the positioning thereof on the panel.
Figure 13 shows a simplified view, according to cross section II of Figure 5, wherein a second application of curing means for curing the adhesive is seen on two second strips of the adhesive layer deposited on the coating sheet, wherein the two second strips of the adhesive layer correspond to two second strips of the coating sheet that will be postformed after the positioning of the coating sheet on the panel.
Figure 14 shows a simplified view, according to cross section JJ of Figure 5, wherein a third application of curing means for curing the adhesive is seen on a third strip of the adhesive layer deposited on the coating sheet, wherein the third strip of the adhesive layer corresponds to a third strip of the coating sheet that will be postformed after the postforming of the second strips of the coating sheet.
Figure 15 shows a simplified view, according to cross section KK of Figure 5, wherein a fourth application of curing means for curing the adhesive is seen on a fourth strip of the adhesive layer deposited on the coating sheet, wherein the fourth end strip of the adhesive layer corresponds to a fourth end strip of the coating sheet that will be postformed after the postforming of the third strip of the coating sheet.
Figure 16 shows a simplified view, according to cross section LL of Figure 5, wherein it shows the assembly formed by panel and coating sheet, after the postforming of the fourth end strip of the coating sheet.
Figure 17 shows a system for adhesive bonding of substrates with postforming of the assembly formed by the panel and continuous coating sheet, wherein the adhesive is applied to the continuous coating sheet by means of a lip, as well as to the panel by means of an applicator roller with subsequent smoothing of the adhesive layer on the panel.
Figure 18 shows a system for adhesive bonding of substrates without postforming of the assembly formed by the panel and continuous coating sheet, wherein the adhesive is applied to the panel by means of an applicator roller with subsequent smoothing of the adhesive layer on the panel.
Figure 19 shows a system for adhesive bonding of substrates without postforming of the assembly formed by the panel and discontinuous coating sheet, wherein the adhesive is applied to the panel by means of an applicator roller with subsequent smoothing of the adhesive layer on the panel.
Figure 20a shows a simplified view of a cross section of the panel with an adhesive/glue layer applied without smoothing.
Figure 20b shows a simplified view of a cross section of the panel with an adhesive/glue layer that is applied and smoothed.
Figure 20c shows a simplified view of a cross section of the panel with an adhesive/glue layer applied in an advanced state of curing.
Figure 21a shows a simplified view of a cross section of the coating sheet with an adhesive/glue layer applied without smoothing.
Figure 21b shows a simplified view of a cross section of the coating sheet with an adhesive/glue layer that is applied and smoothed.
Figure 21c shows a simplified view of a cross section of the coating sheet with an adhesive/glue layer that is applied in an advanced state of curing.
Figure 22 shows a simplified view of the assembly of panel and coating joined without postforming.

### Detailed Description of the Invention

The present invention relates, as mentioned earlier, to a system for adhesive bonding of substrates.

In order to prevent, among others, the aforementioned drawbacks regarding the structuring of the adhesive (1) (see Figure 1), the system and the method of the invention envisage that the adhesive (1) can be applied with a low enough viscosity so that the application thereof does not cause defects or enable an efficient smoothing after the application or, if smoothing means are lacking, enabling an automatic levelling of the adhesive layer (1) before the curing process advances too far, producing an increase in the viscosity of the adhesive (1) which would prevent the subsequent smoothing or automatic levelling of the adhesive layer (1).

To this end, according to the invention, by means of radiation curing means (13) a semi-curing or partial curing of the applied adhesive (1) is performed, before the positioning of the substrates. The adhesive (1) used in the embodiments described below has a dual curing mechanism, the additional curing mechanism being due to a reaction with the moisture, such that, once the substrates have been positioned, the complete curing of the adhesive (1) takes place due to a reaction with the humidity of the air (which can cross through the positioned substrate or the base substrate to the interposed adhesive layer). An example of this type of adhesive is commercially available under the brand name "Dual Curing" by Henkel, which is a PUR-based adhesive which is reactive with moisture.

The use of this type of adhesive (1) or substrates described below is not limiting for the invention. Thus, for example, according to the invention it is also envisaged that a complete curing of the adhesive layer (1) can be performed after the positioning of the substrates also by radiation, in particular, by UV electromagnetic radiation, the latter if the positioned substrate is transparent or translucent to said radiation.

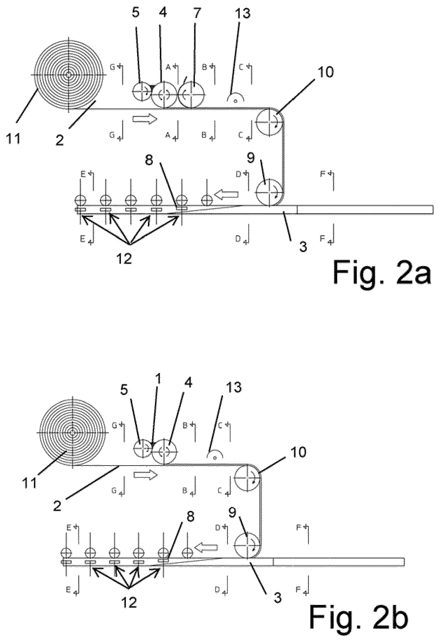

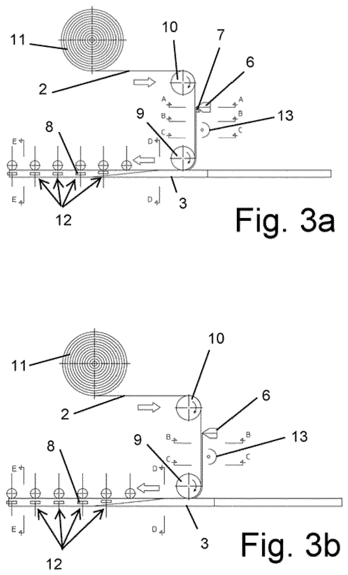

Figure 2a and Figure 3a show two embodiments, according to the present invention, of a system for manufacturing laminated panels with postforming wherein it has been envisaged that, after the application of the adhesive (1) by means of an applicator roller (4) and a dosing roller (5) (Figure 2a) or by means of a lip (6) (Figure 3a), there is a smoothing roller (7).

Figure 2b and Figure 3b show two embodiments, according to the present invention, of systems for manufacturing laminated panels with postforming which are similar respectively to those of Figure 2a and Figure 3a, but wherein said smoothing has not been envisaged after the application of the adhesive layer (1) on the coating sheet (2).

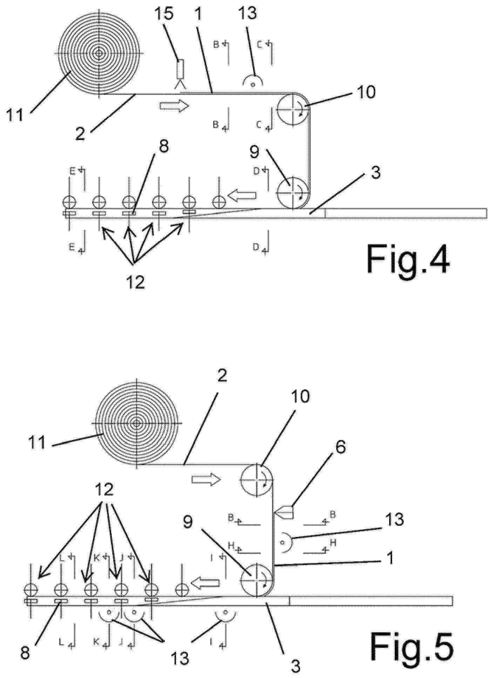

Figure 4 shows an embodiment, according to the present invention, of a system for adhesive bonding of substrates with postforming similar to that of Figure 2b, but wherein the application of the adhesive layer (1) is applied by means of a glue spray nozzle (15) instead of by means of an applicator roller (4).

In the mentioned figures, the advance direction of the coating sheet (2) and the panel (3) is indicated by arrows along the system for adhesive bonding of substrates with postforming, as well as the direction of rotation of the rollers.

Whether or not there is specifically a smoothing roller (7), in all the systems for adhesive bonding of substrates with postforming shown in the figures, there is a positioning roller (9) for the coating sheet (2) on the panel (3) to be postformed. This positioning roller (9) can also fulfil a certain smoothing function for the adhesive layer (1) located between the coating sheet (2) and the panel (3), by exerting a pressure on the coating sheet (2) (and therefore, on the adhesive layer (1)) against the panel (3).

Nevertheless, taking into account that the positioning roller (9) acts after a time has passed since the application of the adhesive layer (1) on the coating sheet (2), it is desirable for the smoothing or automatic levelling of the adhesive layer (1) to have started earlier, since the time it is applied on the coating sheet (2). For this reason, it is desirable to arrange the adhesive (1) with a very low viscosity at the time it is applied on the coating sheet (2). The same would happen if it is applied to the panel (3) or both.

In all the systems for adhesive bonding of substrates with postforming shown in the figures, there is also a guide roller (10), which ensures that the coating sheet (2) is maintained in the path thereof from the coil (11) to the panel (3).

In systems for adhesive bonding of substrates with postforming, after the positioning of the coating sheet (2) on the panel (3), it is necessary to perform postforming operations in order to couple and adapt, in those cross sections or strips where necessary, the coating sheet (2) to the geometry of the contours (14) of the panel (3). To do this, after the positioning of the coating sheet (2) on the panel (3), there are postforming means (12) (typically consisting of postforming rollers (8) and/or presses) which perform the adaptation of the coating sheet (2) to the specific geometry of each cross section, strip or contour (14) of the panel (3).

As already mentioned, it is important that, at the right times, the adhesive (1) which forms the adhesive layer (1) has the suitable viscosity and internal cohesion. This is especially important during the postforming operations since, as they are normally narrow cross sections or strips of the coating sheet (2) that have to coat narrow strips or contours (14) of the panel (3), the elastic force exerted by the coating sheet (2) to recover the extended geometry thereof (before the postforming) is very intense, therefore requiring the adhesive (1) to have a high adhering strength at the precise moment when the postforming operations are to be performed.

For this reason, the method for adhesive bonding of substrates object of the present disclosure, however not an object of the invention, foresees the application of curing means (13) for the adhesive layer (1) in those strips of the adhesive layer (1) located on corresponding strips of the coating sheet (2) that will be postformed in order to be adapted to corresponding strips, cross sections or contours (14) of the panel (3).

The curing means (13) may comprise means for emitting infrared radiation (IR, NIR), emission means for emitting ultraviolet (UV) radiation or another type of radiation. These curing means are configured to perform a partial curing of the adhesive in a selected manner, enabling the application of a selected radiation energy to the adhesive layer.

Thus, in Figure 2a, Figure 2b, Figure 3a, Figure 3b, Figure 4 and Figure 5, the application of curing means (13) for the adhesive layer (1) is seen at an instant immediately after the application of the adhesive layer (1) on the coating sheet (2) and at a time before the positioning and postforming of the coating sheet (2) on the panel (3). These curing means (13) can be applied on the entirety or on particular strips of the adhesive layer (1) located on particular strips of the coating sheet (2) that will be postformed on corresponding strips, cross sections or contours (14) of the panel (3). **In** this manner, the process of curing the adhesive layer (1) in said strips to be postformed is accelerated so that when the postforming operation has to be carried out, said strips of the adhesive layer (1) have the ideal properties of viscosity and internal cohesion which enable the coating sheet (2) to stay perfectly adhered to the panel (3) in said strips or contours (14) without the coating sheet (2) coming off the panel (3) and recovering the initial shape thereof.

Likewise, in Figure 5, a variant of a system of the system for adhesive bonding of substrates with postforming is seen for the execution of an embodiment of the method for adhesive bonding of substrates wherein curing means (13) are applied inserted between successive applications of postforming means (12) on the coating sheet (2) and on the panel (3). **In** this manner, the curing of the adhesive layer (1) is accelerated instantaneously and at the right times in the corresponding strips that will be postformed in each postforming step, at each instant immediately before the postforming of the corresponding strips.

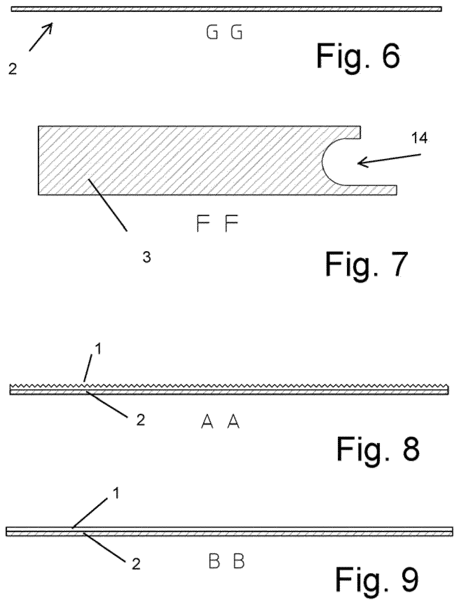

Figure 6 shows a cross-sectional view of the coating sheet (2) before the application of the adhesive layer (1), i.e., a view corresponding to the cross section GG indicated, for example, in Figure 2a and in Figure 2b.

Figure 7 shows a cross-sectional view of the panel (3) before the positioning of the coating sheet (2), i.e., a view corresponding to the cross section FF indicated, for example, in Figure 2a and in Figure 2b. A contour (14) of the panel (3) is shown to which the coating sheet (2) will have to be coupled subsequently by means of one or more postforming operations.

Figure 8 shows a cross-sectional view of the coating sheet (2) with the adhesive layer (1) recently applied and without smoothing or automatic levelling, such that the structuring of the adhesive layer (1) forming crests and valleys, or other defects can be seen. This view corresponds to the cross section AA indicated, for example, in Figure 2a.

Figure 9 shows a cross-sectional view of the coating sheet (2) with the adhesive layer (1) already smoothed or automatically levelled or applied without defects. This view corresponds to the cross section BB indicated, for example, in Figure 2a, Figure 2b, Figure 3a, Figure 3b, Figure 4 and Figure 5.

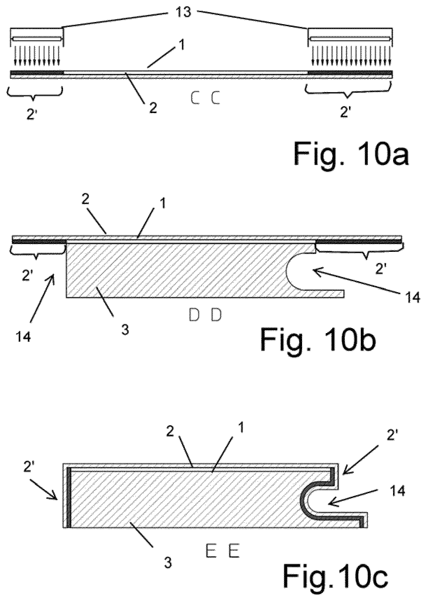

Figure 10a shows a cross-sectional view of the coating sheet (2) and the adhesive layer (1), wherein the application of curing means (13) to two end strips (2') of the adhesive layer (1) can be seen. This view corresponds to the cross section CC indicated, for example, in Figure 2a, Figure 2b, Figure 3a, Figure 3b and Figure 4.

The portions or strips of the adhesive layer (1) subjected to the curing means (13) are shown in a dark colour in the figures, as opposed to the portions of the adhesive layer that have not been subjected to the curing means (13).

Figure 10b shows the positioning of the coating sheet (2) of Figure 10a on the panel (3). This view corresponds to the cross section DD indicated, for example, in Figure 2a, Figure 2b, Figure 3a, Figure 3b and Figure 4. The panel (3) shows a contour (14) on the right with a geometry that is curved and more complicated than the other contour (14) on the left end, which has a simple, straight geometry.

Figure 10c shows the coating sheet (2) of Figure 10b, after the postforming of the end strips (2') on the contours (14) of the panel (3). This view corresponds to the cross section EE indicated, for example, in Figure 2a, Figure 2b, Figure 3a, Figure 3b and Figure 4.

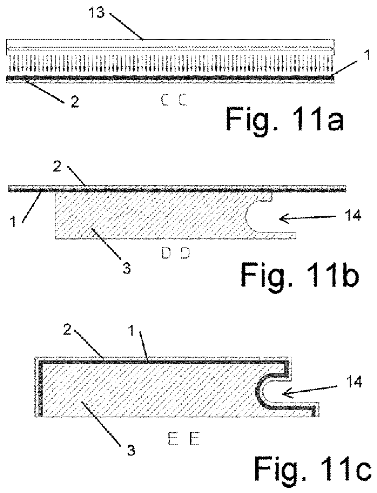

Figure 11a, Figure 11b and Figure 11c respectively show views and cross sections similar to those of Figure 10a, Figure 10b and Figure 10c. Nevertheless, in the case of Figure 11a, Figure 11b and Figure 11c, the curing means (13) have been applied on the entire adhesive layer (13) and not only on certain strips.

The invention also envisages applying the curing means (13) on the entire surface of the adhesive layer (1), but with a different intensity according to different strips of the adhesive layer (1). This enables different degrees of viscosity and internal cohesion to be achieved on different strips of the adhesive layer (1), depending on whether or not postforming operations need to be performed on said strips of the adhesive layer (1), or depending on the severity of said postforming operations, severity being understood as the intricate, closed or angular nature of the geometry of the contour (14) of the panel (3) to be coated. The more intricate, closed or angular this geometry is, the greater the tendency of the coating sheet (2) to recover the initial geometry thereof and, therefore, the more critical it will be for the adhesive layer (1) in said strips to have a greater adhering strength.

It is worth mentioning (as just introduced) that sometimes it may be interesting to apply curing means (13) to strips of the adhesive layer (1) corresponding to strips of the coating sheet (2) that will not be postformed. This is because sometimes the strips that will not undergo postforming are very narrow and, therefore, when contiguous strips of the coating sheet (2) are postformed, there is a risk of a relative displacement being produced between the coating sheet (2) and the panel (3), as well as in the narrow strips not subjected to postforming. For this reason, it is also of interest to apply curing means (13) to these strips that will not be postformed, in order to increase the firmness of the adhesion of the coating sheet (2) to the panel (3) in said strips, in order to prevent possible subsequent relative displacements between the coating sheet (2) and the panel (3).

As already mentioned, when commenting on Figure 5, the method for adhesive bonding of substrates object of the present disclosure, however not an object of the invention, foresees the application of curing means (13) at different times throughout the lamination process.

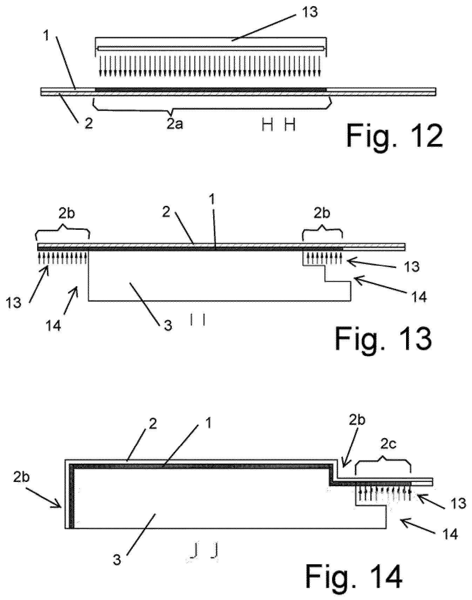

Figure 12 shows a first application of curing means (13) on the adhesive layer (1) in correspondence with a first central strip (2a) of the coating sheet (2), which subsequently, as seen in Figure 13, will be positioned on a diaphanous area of the panel (3) and will not undergo postforming. This view of Figure 12 corresponds to the cross section HH shown in Figure 5.

Figure 13 corresponds to the cross section II shown in Figure 5. Figure 13 shows a second application of curing means (13) on the adhesive layer (1), in correspondence with second strips (2b) of the coating sheet (2) that will be postformed on respective contours (14) of the panel (3). A contour (14) whereon the coating sheet (2) will be postformed is located on the left end of the panel (3), and it has a straight geometry. The other contour (14) is located on the right (14) of the panel (3) and is the first of a succession of steps of a stepped geometry.

Figure 14 shows the second strips (2b) of the coating sheet (2) of Figure 13 already postformed on the panel (3). Figure 14 shows a third application of the curing means (13) on the adhesive layer (1), in correspondence with a third strip (2c) of the coating sheet (2) that will be postformed on the respective contour (14) of the panel (3). This view of Figure 14 corresponds to the cross section JJ shown in Figure 5.

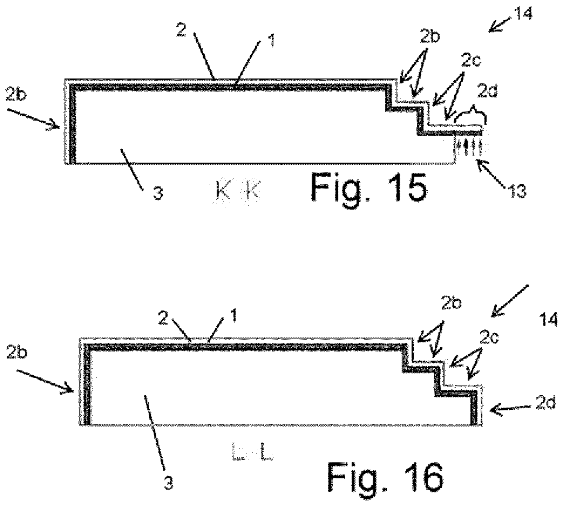

Figure 15 shows the third strip (2c) of the coating sheet (2) of Figure 14 already postformed on the panel (3). Figure 15 shows a fourth application of the curing means (13) on the adhesive layer (1), in correspondence with a fourth strip (2d) of the coating sheet (2) that will be postformed on the respective contour (14) of the panel (3). This view of Figure 15 corresponds to the cross section KK shown in Figure 5.

Figure 16 shows the coating sheet (2) of Figure 5 completely postformed (in the corresponding strips (2b, 2c, 2d)) on the panel (3) of Figure 5. This view of Figure 16 corresponds to the cross section LL shown in Figure 5.

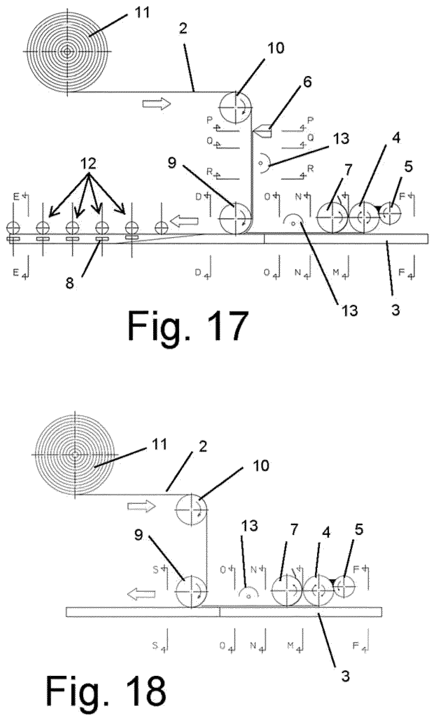

Figure 17 shows an additional embodiment, according to the present invention, of a system for manufacturing laminated panels with postforming similar to the embodiment shown in figure 5, wherein, unlike this one, it has been envisaged that an additional application of adhesive (1) also takes place by means of an applicator roller (4) and a dosing roller (5) on the panel (3) before the positioning of the coating sheet (2) on the panel (3). Between the positioning, by means of the positioning roller (9) and the application of adhesive (1) on the panel (3), a smoothing takes place by means of the smoothing roller (7) and a semi-curing by means of curing means (13), for example, by UV radiation.

Figure 18 shows an additional embodiment, according to the present invention, of a system for manufacturing laminated panels, wherein, unlike the previous embodiments, the adhesive layer is applied only on the panel (3), not on the sheet (2). In the example of the embodiment shown, postforming is not performed.

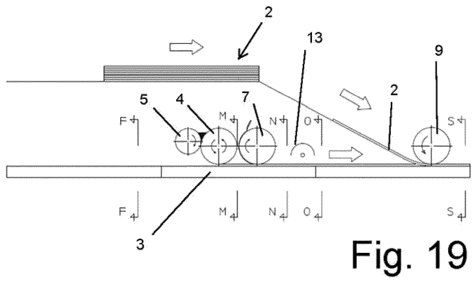

Figure 19 shows an additional embodiment, according to the present invention, of a system for manufacturing laminated panels, wherein, unlike the previous embodiments, the coating sheet (2) is supplied discontinuously, i.e., sheet by sheet, from a stack of coating sheets (2). In the example of the embodiment shown, postforming is not performed.

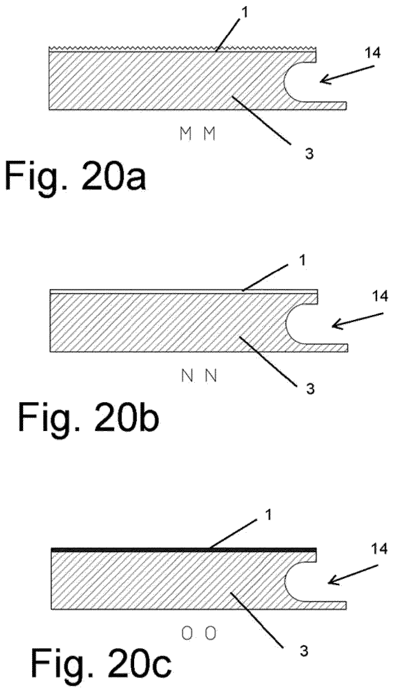

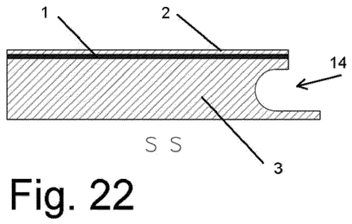

Figures 20a, 20b, 20c and 22 show a cross-sectional view of the panel (3) in the corresponding cross sections MM, NN, OO and SS of the embodiments shown in the previous Figures.

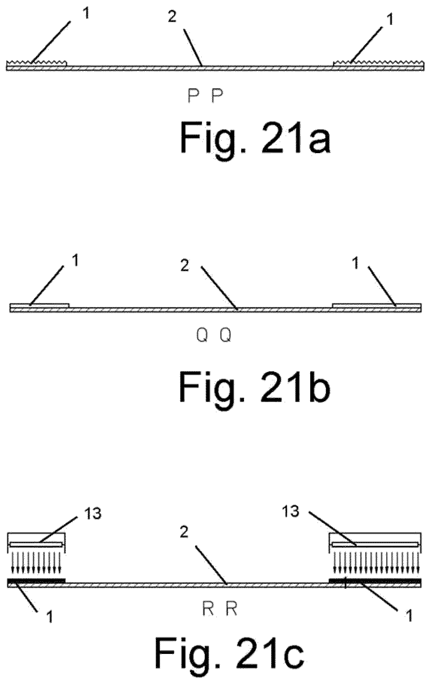

Figures 21a, 21b and 21c show a cross-sectional view of the sheet (2) in the corresponding cross sections PP, QQ and RR of the embodiments shown in the previous Figures.

## Claims

1. A system for adhesive bonding of substrates, wherein a first substrate is a coating material (2) and a second substrate is a coating support (3) whereon the coating material (2) is positioned, wherein the system comprises application means for applying an adhesive layer (1) on the coating material (2) and/or on the coating support (3), and positioning means (8; 9, 12) for positioning the coating material (2) on the coating support (3), the system comprising radiation curing means (13) for partially curing the adhesive layer (1) arranged between the application means for applying the adhesive layer (1) and the positioning means (8; 9, 12) in a selected manner;
wherein the positioning means (8; 9, 12) comprise postforming means (8; 12) for postforming at least one strip (2', 2b, 2c, 2d) of the coating material (2) on at least one contour (14) of the coating support (3);
wherein the postforming means perform the adaptation of the at least one strip (2', 2b, 2c, 2d) of the coating material (2) to the specific geometry of the at least one contour (14) of the coating support (3); and
wherein the curing means (13) is configured to be applied in correspondence with the at least one strip (2', 2b, 2c, 2d) of the coating material prior to and/or during the postforming thereof on the at least one contour of the coating support (3).

2. The system for adhesive bonding of substrates according to claim 1, wherein the positioning means (8, 9) are formed by at least one roller for positioning the coating material (2) such that the coating material (2) is positioned on the coating support (3) when it is pressed by the positioning roller against the coating support (3).

3. The system for adhesive bonding of substrates according to any of the preceding claims, wherein the postforming means are rollers and/or presses.

4. The system for adhesive bonding of substrates according to any of the preceding claims, comprising smoothing means for smoothing the adhesive layer (1).

5. The system for adhesive bonding of substrates according to any of the preceding claims, wherein the curing means (13) comprises radiation means selected from the group consisting of electromagnetic radiation, in particular, UV or IR, and corpuscular radiation, in particular, with electrons.

6. The system for adhesive bonding of substrates according to any of the preceding claims, wherein the curing means (13) cure the adhesive layer (1) at least 50% or 75% which corresponds to a degree of polymerization in percentage with respect the complete polymerization.

7. The system for adhesive bonding of substrates according to any of the preceding claims, configured to finish curing of the adhesive layer (1) by means of the application of radiation which can cross through the coating substrate, after the positioning of the substrates.

8. The system for adhesive bonding of substrates according to any of the preceding claims, wherein the adhesive layer comprises adhesive with a curing mechanism additional to that of curing by radiation, in particular, an adhesive with a dual curing mechanism.

9. The system for adhesive bonding of substrates according to any of the preceding claims, wherein the positioning means (8; 9, 12) are configured to apply the postforming in several steps.

10. The system for adhesive bonding of substrates according to any of the preceding claims, wherein postforming means perform at least one additional application of the curing means (13) between two steps of the postforming.

## Patentansprüche

1. System zum Verkleben von Substraten, wobei ein erstes Substrat ein Beschichtungsmaterial (2) ist und ein zweites Substrat ein Beschichtungsträger (3) ist, auf dem das Beschichtungsmaterial (2) positioniert wird, wobei das System eine Auftragungseinrichtung zum Auftragen einer Klebstoffschicht (1) auf dem Beschichtungsmaterial (2) und/oder auf dem Beschichtungsträger (3) und Positionierungseinrichtungen (8; 9, 12) zum Positionieren des Beschichtungsmaterials (2) auf dem Beschichtungsträger (3) aufweist, wobei das System aufweist:
eine Strahlungshärtungseinrichtung (13) zum teilweisen Härten der Klebstoff-schicht (1), die zwischen der Aufbringungseinrichtung zum Aufbringen der Klebstoff-schicht (1) und den Positionierungseinrichtungen (8; 9, 12) angeordnet ist, auf eine ausge-wählte Weise;
wobei die Positionierungseinrichtungen (8; 9, 12) Nachformungseinrichtungen (8; 12) zum Nachformen wenigstens eines Streifens (2', 2b, 2c, 2d) des Beschichtungsma-terials (2) auf wenigstens einem Umriss (14) des Beschichtungsträgers (3) aufweisen;
wobei die Nachformungseinrichtungen die Anpassung des wenigstens einen Streifens (2', 2b, 2c, 2d) des Beschichtungsmaterials (2) an die spezifische Geometrie des wenigstens einen Umrisses (14) des Beschichtungsträgers (3) durchführen; und
wobei die Härtungseinrichtung (13) konfiguriert ist, um vor und/oder während dessen Nachverformung entsprechend dem wenigstens einen Streifen (2', 2b, 2c, 2d) des Beschichtungsmaterials auf dem wenigstens einen Umriss des Beschichtungsträgers (3) aufgetragen zu werden.

2. System zum Verkleben von Substraten nach Anspruch 1, wobei die Positionierungseinrichtungen (8, 9) durch wenigstens eine Walze zum Positionieren des Beschichtungsmaterials (2) ausgebildet sind, so dass das Beschichtungsmaterial (2) auf dem Beschichtungsträger (3) positioniert wird, wenn es von der Positionierungswalze gegen den Beschichtungsträger (3) gedrückt wird.

3. System zum Verkleben von Substraten nach einem der vorhergehenden An-sprüche, wobei die Nachformungseinrichtungen Walzen und/oder Pressen sind.

4. System zum Verkleben von Substraten nach einem der vorhergehenden An-sprüche, das eine Glättungseinrichtung zum Glätten der Klebstoffschicht (1) aufweist.

5. System zum Verkleben von Substraten nach einem der vorhergehenden An-sprüche, wobei die Härtungseinrichtung (13) eine Bestrahlungseinrichtung aufweist, die aus der Gruppe ausgewählt wird, die aus elektromagnetischer Strahlung, insbesondere UV oder IR, und Korpuskularstrahlung, insbesondere mit Elektronen, besteht.

6. System zum Verkleben von Substraten nach einem der vorhergehenden An-sprüche, wobei die Härtungseinrichtung (13) die Klebstoffschicht zu wenigstens 50% oder 75% härtet, was einem Polymerisationsgrad als Prozentsatz in Bezug auf die vollständige Polymerisation entspricht.

7. System zum Verkleben von Substraten nach einem der vorhergehenden An-sprüche, das konfiguriert ist, um das Härten der Klebstoffschicht (1) nach dem Positionie-ren der Substrate mittels der Anwendung von Strahlung abzuschließen, welche das Beschichtungssubstrat durchqueren kann.

8. System zum Verkleben von Substraten nach einem der vorhergehenden An-sprüche, wobei die Klebstoffschicht Klebstoff mit einem Härtungsmechanismus zusätzlich zu dem des Härtens durch Strahlung, insbesondere einen Klebstoff mit einem zweifachen Härtungsmechanismus, aufweist.

9. System zum Verkleben von Substraten nach einem der vorhergehenden An-sprüche, wobei die Positionierungseinrichtungen (8; 9, 12) konfiguriert sind, um das Nach-formen in mehreren Schritten anzuwenden.

10. System zum Verkleben von Substraten nach einem der vorhergehenden Ansprüche, wobei die Nachformungseinrichtungen wenigstens eine zusätzliche Anwen-dung der Härtungseinrichtung (13) zwischen zwei Schritten des Nachformens durchfüh-ren.

## Revendications

1. Système de collage de substrats, dans lequel un premier substrat est un matériau de revêtement (2) et un second substrat est un support de revêtement (3) sur lequel le matériau de revêtement (2) est positionné, dans lequel le système comprend des moyens d'application pour appliquer une couche adhésive (1) sur le matériau de revêtement (2) et/ou sur le support de revêtement (3), et des moyens de positionnement (8 ; 9, 12) pour positionner le matériau de revêtement (2) sur le support de revêtement (3), le système comprenant des moyens de durcissement par rayonnement (13) pour durcir partiellement la couche adhésive (1) agencés entre les moyens d'application pour appliquer la couche adhésive (1) et les moyens de positionnement (8 ; 9, 12) de manière sélectionnée ;
dans lequel les moyens de positionnement (8 ; 9, 12) comprennent des moyens de post-formage (8 ; 12) pour post-former au moins une bande (2', 2b, 2c, 2d) du matériau de revêtement (2) sur au moins un contour (14) du support de revêtement (3) ;
dans lequel les moyens de post-formage réalisent l'adaptation de l'au moins une bande (2', 2b, 2c, 2d) du matériau de revêtement (2) à la géométrie spécifique de l'au moins un contour (14) du support de revêtement (3) ; et
dans lequel les moyens de durcissement (13) sont configurés pour être appliqués en correspondance avec l'au moins une bande (2', 2b, 2c, 2d) du matériau de revêtement avant et/ou pendant leur post-formage sur l'au moins un contour du support de revêtement (3).

2. Système de collage de substrats selon la revendication 1, dans lequel les moyens de positionnement (8, 9) sont formés par au moins un rouleau de positionnement du matériau de revêtement (2) de sorte que le matériau de revêtement (2) soit positionné sur le support de revêtement (3) lorsqu'il est pressé par le rouleau de positionnement contre le support de revêtement (3).

3. Système de collage de substrats selon l'une quelconque des revendications précédentes, dans lequel les moyens de post-formage sont des rouleaux et/ou des presses.

4. Système de collage de substrats selon l'une quelconque des revendications précédentes, comprenant des moyens de lissage pour lisser la couche adhésive (1).

5. Système de collage de substrats selon l'une quelconque des revendications précédentes, dans lequel les moyens de durcissement (13) comprennent des moyens de rayonnement choisis dans le groupe constitué d'un rayonnement électromagnétique, en particulier UV ou IR, et d'un rayonnement corpusculaire, en particulier, avec des électrons.

6. Système de collage de substrats selon l'une quelconque des revendications précédentes, dans lequel les moyens de durcissement (13) durcissent la couche adhésive (1) à au moins 50 % ou 75 %, ce qui correspond à un degré de polymérisation en pourcentage par rapport à la polymérisation complète.

7. Système de collage de substrats selon l'une quelconque des revendications précédentes, configuré pour terminer le durcissement de la couche adhésive (1) au moyen de l'application d'un rayonnement qui peut traverser le substrat de revêtement, après le positionnement des substrats.

8. Système de collage de substrats selon l'une quelconque des revendications précédentes, dans lequel la couche adhésive comprend un adhésif avec un mécanisme de durcissement supplémentaire à celui de durcissement par rayonnement, en particulier un adhésif avec un mécanisme de durcissement double.

9. Système de collage de substrats selon l'une quelconque des revendications précédentes, dans lequel les moyens de positionnement (8 ; 9, 12) sont configurés pour appliquer le post-formage en plusieurs étapes.

10. Système de collage de substrats selon l'une quelconque des revendications précédentes, dans lequel des moyens de post-formage réalisent au moins une application supplémentaire des moyens de durcissement (13) entre deux étapes du post-formage.
